# FASCICULE DE BREVET EUROPEEN

(11) **EP 1 681 833 B1**
(45) Date de publication et mention de la délivrance du brevet: **21.11.2007**
(21) Numéro de dépôt: 06100404.0
(22) Date de dépôt: 16.01.2006
(51) Int. Cl.: H04L 29/08

(54) **Procédés et dispositifs de diffusion et d'accès à une offre de service spécifique à une zone géographique dans un réseau de télécommunications sans fil**
Verfahren und Vorrichtungen zum Anbieten des Zugangs zu einem ortsabhängigen Dienst in einem drahtlosen Telekommunikationsnetz
Systems and methods for providing access to a location specific service in a wireless telecommunications network

(30) Priorité: 18.01.2005 FR 0500494
(43) Date de publication de la demande: 19.07.2006
(73) Titulaire: FRANCE TELECOM, 75015 Paris (FR)
(72) Inventeur: Tran Xuan, Fabrice, 38320 Eybens (FR); Villain, Eric, 38400 Saint Martin D'Heres (FR); Teyssier, Henri, 38330 Saint Nazaire les Eymes (FR)
(74) Mandataire: Delumeau, François Guy

(56) Documents cités:
- EP-A- 1 244 021
- WO-A-03/007553
- "AXIS MOBILE ACCESS SERVER" PRODUCT DESCRIPTION AXIS COMMUNICATION, 2000, pages 1-16, XP002950227

## Description

### Contexte de l'invention

La présente invention se situe dans le domaine général de la diffusion d'offres de services spécifiques à une zone géographique dans laquelle évoluent des terminaux communicants.

Ce concept de services locaux (ou service provisioning) permet à un terminal de voir apparaître spontanément une offre de service associée au lieu où il se trouve, tout changement de lieu étant susceptible d'entraîner l'apparition d'une offre différente.

La présente invention peut être utilisée dans un réseau local, à savoir dans tout type de réseau géographiquement délimité dans lequel des services spécifiques peuvent être mis en oeuvre.

### Technique antérieure

La société Appear Networks propose un système pour présenter automatiquement, à un utilisateur d'un terminal sans fil, des applications en fonction de sa localisation.

Ce système repose sur le découpage du réseau de télécommunications sans fil en zones de services, chacune de ces zones étant associée à une adresse multicast.

Selon ce système, chaque zone de service est desservie par un ensemble d'équipements radioélectriques, chacun de ces équipements devant être préalablement configuré pour filtrer toutes les adresses multicast en circulation sur le réseau sauf celles de sa zone. Cette opération de configuration est pour le moins fastidieuse, notamment lorsque ce système est utilisé dans un site dont la topologie varie fréquemment (parc d'exposition par exemple).

On connaît également un système, proposé par la même société Appear Networks, dans lequel le découpage des zones repose sur des mesures de calibration du site.

Plus précisément, des mesures de puissance de signaux radioélectriques reçus en provenance de bornes d'accès au réseau de télécommunications sans fil sont effectuées régulièrement et mises en corrélation avec un plan de ce site.

Une application installée sur les terminaux communicants permet de déterminer la position de l'utilisateur et donc la zone de service dans laquelle il évolue.

Ce système présente l'inconvénient selon lequel le processus de calibration n'est pas fiable dans le temps, car très facilement perturbable en cas de changement de l'environnement (ajout ou suppression de cloisons, présence d'une foule,...).

Le document DI = "EP-A- 1244021" décrit des dispositifs et des procédés similaires à l'invention. Le document D2 = "AXIS MOBILE ACCESS SERVER" PRODUCT DESCRIPTION AXIS COMMUNICATION, 2000, pages 1-16 décrit un serveur offrant des services aux utilisateurs des terminaux sans fil.

La présente invention vise à pallier les inconvénients précités. A cet effet, et selon un premier aspect, elle concerne un dispositif d'accès, via un réseau de télécommunications sans fil à des services délivrés dans des zones de service couvertes par le réseau, ce dispositif comportant :
- des moyens d'obtention d'un fichier définissant les zones de service, une zone de service étant définie dans ce fichier, par la liste des adresses des bornes fixes d'accès au réseau, situées dans la zone ;
- des moyens de communication sans fil adaptés à obtenir périodiquement l'adresse de la borne fixe de rattachement du dispositif au réseau de télécommunications sans fil ;
- des moyens de détermination de la zone courante d'utilisation dudit dispositif à partir du fichier de zones et de l'adresse de la borne de rattachement ;
- des moyens pour obtenir un fichier définissant les services offerts dans la zone ; et

- des moyens de présentation de ces services à un utilisateur du dispositif.

Corrélativement, l'invention concerne un procédé d'accès à des services délivrés dans des zones de service couvertes par un réseau de télécommunication sans fil, ce procédé étant susceptible d'être mis en oeuvre par un dispositif d'accès tel que mentionné ci-dessus, ce procédé comportant :
- une étape d'obtention d'un fichier définissant les zones de service, une zone de service étant définie dans ce fichier, par la liste des adresses des bornes fixes d'accès au réseau situées dans la zone ;
- une étape d'obtention de l'adresse de la borne fixe de rattachement du dispositif d'accès au réseau de télécommunications sans fil ;
- une étape de détermination de la zone courante d'utilisation du dispositif à partir du fichier de zones et de l'adresse de la borne de rattachement ;
- une étape d'obtention d'un fichier définissant les services offerts dans la zone ; ;et
- une étape de présentation de ces services à un utilisateur du dispositif.

La localisation du dispositif d'accès selon l'invention repose donc sur la connaissance de l'adresse unique (adresse MAC) de la borne fixe du réseau sans fil à laquelle il est rattaché, une zone de service étant définie par les adresses des bornes fixes situées dans cette zone.

Ainsi, il n'est pas nécessaire de reconfigurer les bornes fixes d'accès lorsque la topologie du réseau sans fil est modifiée.

Par ailleurs, aucune phase de calibration n'est nécessaire.

Selon un deuxième aspect, l'invention concerne un dispositif de gestion d'une offre des services délivrés dans des zones de services couvertes par un réseau de télécommunications sans fil, une pluralité des terminaux reliés audit réseau de télécommunication sans fil constituant un réseau de pairs, ce dispositif comportant :
- des moyens de mémorisation d'un fichier définissant les zones de services, une zone de service étant définie dans ce fichier, par la liste des adresses des bornes fixes d'accès au réseau de communication sans fil, situées dans cette zone ;
- des moyens de mémorisation d'un fichier définissant les services offerts dans les zones ; et
- des moyens pour mettre ces fichiers à disposition des pairs du réseau de pairs.

Corrélativement, l'invention vise aussi un procédé de gestion d'une offre des services délivrés dans des zones de service couvertes par un réseau de télécommunications sans fil, une pluralité des terminaux reliés audit réseau de télécommunication sans fil constituant un réseau de pairs, ce procédé comportant :
- une étape de mémorisation d'un fichier définissant les zones de services, une zone de service étant définie dans ce fichier, par la liste des adresses des bornes fixes d'accès au réseau de communication sans fil, situées dans la zone ;
- une étape de mémorisation d'un fichier définissant les services offerts dans les zones; et
- une étape au cours de laquelle on met les fichiers à disposition des pairs du réseau de pairs.

Selon cet aspect de l'invention, le dispositif de gestion met avantageusement ces fichiers à disposition des pairs en bénéficiant du service de partage intrinsèque du réseau de pairs.

On rappelle à cet effet qu'un réseau de pairs est un réseau dans lequel chaque station (dénommée "pair", en anglais "peer") a des capacités et responsabilités équivalentes. Ce concept diffère donc de l'architecture client/serveur dans laquelle un petit nombre de stations sont destinées à servir les autres. Tous les pairs peuvent aussi s'organiser en groupes de pairs, communiquer entre eux, publier et découvrir des ressources réseaux (canaux de notifications).

Dans ce mode de réalisation, le dispositif d'accès mentionné ci-dessus s'abonne en tant que pair client dans le réseau de pairs et obtient les fichiers de zones et de services à partir d'un pair de ce réseau.

Plus précisément, et de façon préférentielle, le dispositif de gestion selon l'invention est adapté à accepter une requête d'abonnement en provenance d'un pair client dans le réseau et à envoyer, en réponse à cette requête, une référence pour obtenir le fichier de zones à partir d'un pair du réseau.

Les fichiers de zones et de services peuvent notamment être compressés pour économiser la bande passante sur le réseau de télécommunications sans fil.

Préférentiellement, ces fichiers sont conformes au format XML ce qui permet de représenter l'offre de services de façon structurelle, par exemple selon des thèmes.

Chaque service, ou chaque thème de services, peut être associé à une icône dans le fichier de définition des services, ces icônes pouvant être présentées à l'utilisateur du dispositif d'accès.

Selon une implémentation préférée, les différentes étapes du procédé d'accès et du procédé de gestion sont déterminées par des instructions de programmes d'ordinateurs.

En conséquence, l'invention vise aussi un programme d'ordinateur sur un support d'informations, ce programme pouvant être mis en oeuvre dans un dispositif d'accès, ce programme comportant des instructions adaptées à la mise en oeuvre d'un procédé d'accès tel que mentionné ci-dessus.

Et l'invention vise aussi un programme d'ordinateur sur un support d'informations, ce programme pouvant être mis en oeuvre dans un dispositif de gestion d'une offre de services, ce programme comportant des instructions adaptées à la mise en oeuvre d'un procédé de gestion tel que mentionné ci-dessus.

Ces programmes d'ordinateur peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un dispositif susceptible d'être utilisé comme pair dans un réseau de pairs, et comportant des instructions d'au moins un programme d'ordinateur tels que ceux mentionnés ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un réseau de télécommunications sans fil dans lequel évoluent un dispositif d'accès et un dispositif de gestion d'une offre de services conformes à l'invention dans un mode préféré de réalisation ;
- la figure 2 représente un fichier de zones pouvant être utilisé dans l'invention ;
- la figure 3 représente, sous forme d'organigramme, les principales étapes d'un procédé d'accès conforme à l'invention dans un mode préféré de réalisation ; et
- là figure 4 représente, sous forme d'organigramme, les principales étapes d'un procédé de gestion d'une offre de services conforme à l'invention dans un mode préféré de réalisation.

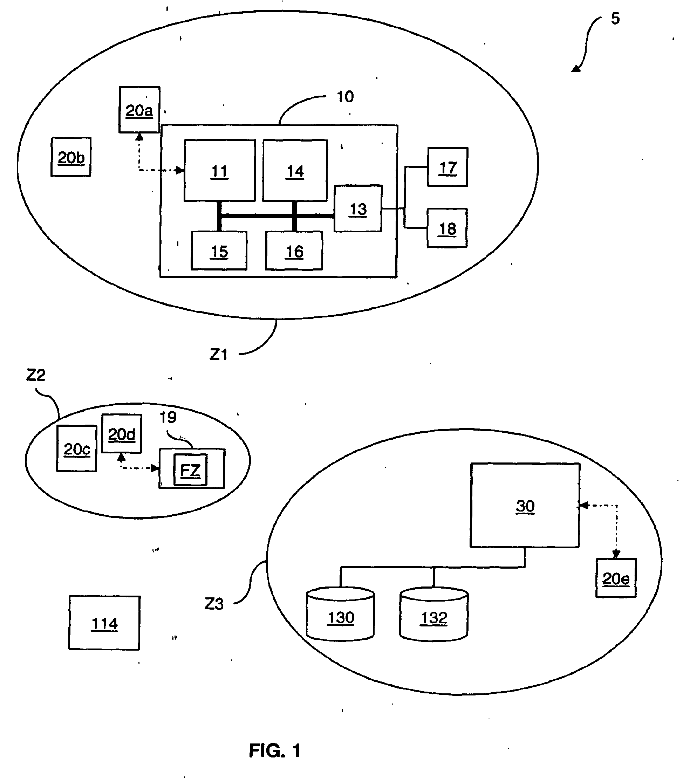

La **figure 1** représente un réseau de télécommunications sans fil 5 découpé en trois zones géographiques Z1, Z2, Z3.

Conformément à l'invention, chaque zone géographique est définie par la liste des adresses des bornes fixes d'accès au réseau de télécommunications sans fil 5 situées dans cette zone. Sur la figure 1, les bornes d'accès au réseau de télécommunications sans fil 5 sont référencées 20a à 20e. Par convention, on appellera ADi l'adresse MAC de la borne d'accès 20i.

De façon connue, cette adresse MAC est un identifiant unique pour chaque borne d'accès ; c'est aussi l'identifiant par lequel un terminal connaît la borne à laquelle il est connecté à un instant (on l'appelle alors BSSID, acronyme de Basic Service Set Identifier).

Ces adresses MAC sont ainsi regroupées pour former des zones de services Z1, Z2, Z3 et la connaissance par un terminal de son BSSID lui permet de connaître la zone de services dans laquelle il évolue.

Ainsi, de retour à la figure 1 :
- la zone Z1 est définie par les adresses ADa, ADb des bornes fixes 20a, 20b situées dans cette zone,
- la zone Z2 est définie par les adresses ADc, ADd des bornes fixes 20c, 20d présentes dans cette zone, et
- la zone Z3 est définie par l'adresse ADe de la borne fixe 20e présente dans cette zone.

La référence 10 représente un dispositif d'accès conforme à l'invention dans un mode préféré de réalisation.

Ce dispositif 10 d'accès comporte un processeur 14, des moyens de télécommunications sans fil 11, une mémoire morte 15, une mémoire vive 16, un clavier 17, un écran 18, ces deux derniers éléments pouvant être contrôlés par le processeur 14 via un module d'entrée/sortie 13.

Conformément à l'invention, le dispositif d'accès 10 comporte des moyens pour déterminer la zone dans laquelle il se trouve.

Pour ce faire, il obtient tout d'abord l'adresse ADa de sa borne de rattachement 20a au réseau de télécommunications sans fil 5. Cette adresse peut typiquement être obtenue par le pilote contrôlant le module 11 de télécommunications sans fil avec cette borne.

Le pilote peut par exemple être contrôlé par le processeur 14 du dispositif d'accès 10.

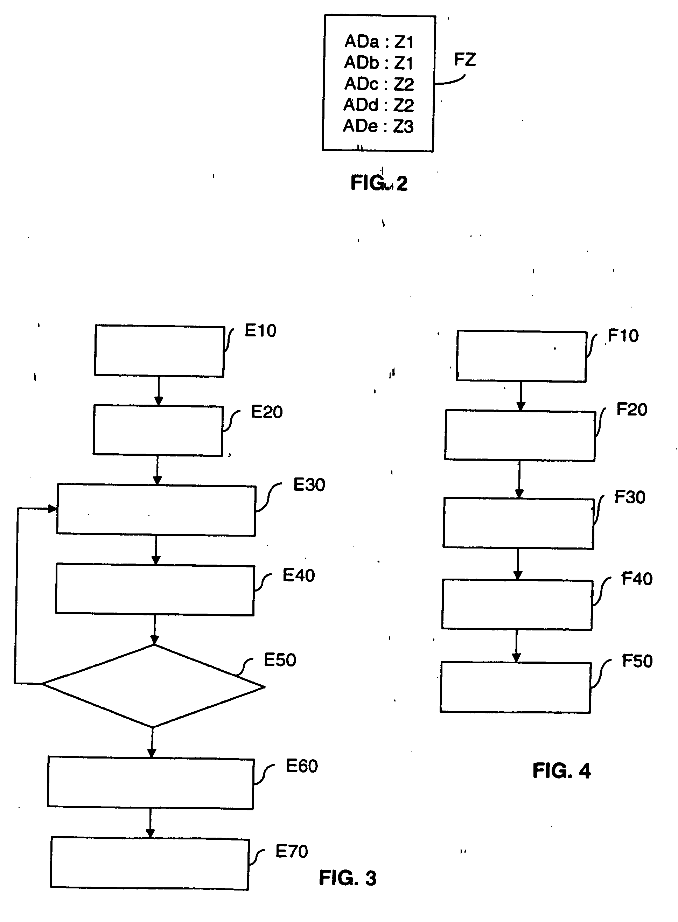

Le dispositif d'accès 10 est également adapté à obtenir, au moyen de son module de télécommunications sans fil 11, un fichier FZ définissant les zones de services couvertes par le réseau de télécommunications sans fil 5. Un tel fichier est représenté à la **figure 2**. Sur cette figure, on retrouve, pour chaque zone de services Z1, Z2, Z3, les adresses des bornes d'accès au réseau 5 situées dans ces zones.

En retrouvant l'adresse ADa de la borne 20a à laquelle il est rattaché dans le fichier de zones FZ, le dispositif d'accès 10 détermine qu'il se trouve dans la zone de services Z1.

Un dispositif de gestion d'une offre de services 30 conforme à l'invention est également représenté à la figure 1.

Ce dispositif 30 est notamment adapté à générer le fichier de zones FZ décrit ci-dessus en référence à la figure 2.

Dans le mode préféré de réalisation décrit ici, ce fichier de zones FZ a préalablement été mémorisé dans une base de données 130 par un administrateur au moyen d'un terminal 114. Ce terminal 114 comporte par exemple des moyens de lecture d'un plan du site dans lequel est installé le réseau de télécommunications sans fil 5, et des moyens pour convertir ce plan en format SVG de manière connue en soi.

En préalable, à chaque site sont associées une carte et son échelle. Le site est alors découpé en zones de services, chaque zone de service étant associée à un plan et son échelle, ainsi qu'à une configuration réseau particulière. On dispose alors des bornes d'accès 20i desservant chaque zone, cette information étant suffisante pour créer le fichier de zones FZ précité.

Le terminal 114 permet également de définir les services disponibles dans chacune des zones Z1, Z2, Z3. Par exemple, ce terminal 114 propose une interface permettant d'afficher dans une première fenêtre l'ensemble des services disponibles et, dans une deuxième fenêtre, les services composant une offre. Ces données de services sont alors stockées dans une base de données 132 accessible au dispositif de gestion de l'offre 30.

Le dispositif d'accès 10 est adapté à obtenir ce fichier de définition de services en utilisant son module de télécommunications sans fil 11.

Dans le mode préféré de réalisation décrit ici, le dispositif d'accès 10, un terminal 19 et le dispositif de gestion 30 constituent des pairs d'un réseau de pairs.

Plus précisément, le dispositif de gestion 30 est un pair serveur dans ce réseau. Lorsque le dispositif de gestion 30 se connecte au réseau de pairs, il utilise le service de partage de contenu de ce réseau pour mettre le fichier de zones FZ et le fichier de services à disposition de tous les pairs 10, 19, 30 du réseau de pairs.

Dans l'exemple de la figure 1, on a supposé que le dispositif de gestion 30 avait obtenu que le fichier de zones FZ soit mis à disposition des autres pairs du réseau par le pair 11 de la zone Z2.

L'infrastructure met à disposition les fichiers à partager en signalant au réseau de pairs qu'une nouvelle ressource (le fichier) identifiée par un nom donné est disponible. Tout pair lançant une recherche à partir de ce nom aura accès à ce contenu indexé par la plate-forme.

Lorsque le dispositif d'accès 10 souhaite accéder au réseau de pairs, il utilise, de façon connue, un canal de communication pour s'abonner auprès du pair de gestion 30. Sur réception de cette requête d'abonnement, le pair de gestion 30 communique au dispositif d'accès 10 une référence pour que celui-ci puisse obtenir le fichier de zones FZ.

Dans l'exemple décrit ici, cette référence est l'adresse du pair 19 qui héberge ce fichier de zones FZ.

Lorsque le dispositif d'accès 10 reçoit le fichier de zones FZ pour la première fois, ou lorsqu'il détecte un changement de zone (par changement de l'adresse de la borne fixe à laquelle il est rattaché), il sollicite le service de partage de fichiers du réseau de pairs afin d'obtenir le fichier d'offres de services pour cette zone.

Sur réception de ce fichier, le dispositif d'accès 10 présente les services disponibles dans la zone Z1 dans laquelle il se trouve.

En pratique, cette présentation consiste à afficher, sur l'écran 17 du dispositif d'accès 10, des icônes représentatives de ces services, ces icônes étant contenues dans le fichier de définition de services.

La **figure 3** représente les principales étapes E10 à E70 d'un procédé d'accès conforme à l'invention dans un mode préféré de réalisation.

Au cours d'une première étape E10, un dispositif d'accès 10 conforme à l'invention émet une requête d'abonnement pour s'abonner à un réseau de pairs.

Cette étape E10 d'abonnement est suivie par une étape E20 au cours de laquelle il reçoit, en réponse à cette requête d'abonnement, une référence pour pouvoir obtenir un fichier de zones FZ disponible sur le réseau de pairs.

Le dispositif d'accès 10 obtient alors ce fichier de zones FZ au cours de la même étape E20. Ce fichier de zones définit des zones de services couvertes par le réseau de télécommunications sans fil, chacune des zones étant définie par la liste des adresses des bornes fixes d'accès à ce réseau.

Cette étape E20 est suivie par une étape E30 au cours de laquelle le dispositif d'accès 10 obtient l'adresse ADa de la borne fixe 20a par laquelle il est rattaché au réseau de télécommunications sans fil.

Cette étape d'obtention d'adresse est suivie par une étape E40 au cours de laquelle il détermine la zone courante dans laquelle il évolue à partir du fichier de zones FZ obtenu à l'étape E20 et de l'adresse ADa obtenue à l'étape E30.

Cette étape de détermination se fait en lisant directement l'identifiant de la zone associée à l'adresse ADa dans le fichier de zones FZ, comme décrit précédemment en référence à la figure 2.

Cette étape E40 de détermination est suivie par un test E50 au cours duquel le dispositif d'accès 10 vérifie si il vient ou non de changer de zone. Le résultat de ce test E50 est positif lorsque le dispositif d'accès vient de changer de zone, c'est-à-dire lorsque l'adresse de la borne de rattachement obtenue à l'étape E30 est associée à une nouvelle zone, ou lors de la première utilisation du dispositif d'accès dans le réseau.

Lorsque ce n'est pas le cas, le résultat du teste E50 est négatif. Ce test est alors suivi par l'étape E30 d'obtention de l'adresse de la borne fixe de rattachement du dispositif d'accès 10 déjà décrite.

Ainsi, les étapes E30 à E50 constituent une boucle permettant de détecter un changement de zone.

Lorsqu'un tel changement de zone est détecté, le test E50 est suivi par une étape E60 au cours de laquelle le dispositif d'accès 10 obtient un fichier de services mis à disposition sur le réseau de pairs.

Ce fichier de services, comme déjà décrit, liste l'ensemble des services disponibles, via le réseau de télécommunications sans fil, dans la zone courante d'utilisation du dispositif d'accès 10.

Cette étape E60 d'obtention du fichier de services est suivie par une étape E70 au cours de laquelle le dispositif d'accès 10 présente lesdits services à un utilisateur de ce dispositif.

Cette étape de présentation consiste par exemple à afficher sur l'écran 18 du dispositif d'accès 10 des icônes représentatives des services disponibles dans cette zone.

Dans le mode préféré de réalisation décrit ici, l'obtention du fichier de zones FZ et du fichier de services s'effectue à partir d'un pair du réseau de pairs. Bien entendu, ces deux fichiers peuvent être obtenus à partir de pairs différents.

Comme décrit précédemment, la mise à disposition de ces deux fichiers sur le réseau de pairs est effectuée par un dispositif de gestion 30 conforme à l'invention mettant en oeuvre un procédé de gestion qui va maintenant être décrit en référence à la figure 4. La **figure 4** représente ainsi les principales étapes F10 à F50 de ce procédé.

Au cours d'une première étape F10, le dispositif de gestion d'offres de services 30 mémorise le fichier de zones FZ dans une base de données 130.

Cette étape F10 est suivie par une étape F20 au cours de laquelle le dispositif de gestion 30 mémorise le fichier définissant les services dans les différentes zones dans la même base de données 130.

Ces fichiers peuvent notamment avoir été créés par un administrateur au moyen du terminal 114.

Quoi qu'il en soit, au cours d'une étape F30, ces deux fichiers sont mis à disposition des pairs du réseau de pairs par le dispositif de gestion d'accès 30.

Cette étape de mise à disposition de fichiers est une étape connue dans le domaine des réseaux de pairs et ne sera pas décrite ici.

Lorsque le dispositif d'accès 30 reçoit, au cours d'une étape F40, une requête d'abonnement en provenance d'un pair client, il répond, au cours d'une étape F50, par l'envoi d'une référence permettant à ce client d'obtenir le fichier de zones FZ sur le réseau de pairs. Dans l'exemple décrit ici, cette référence est l'adresse du pair 19 qui mémorise le fichier de zones FZ.

## Revendications

1. Dispositif d'accès, via un réseau de télécommunications sans fil (5) à des services délivrés dans des zones (Z1, Z2) de service couvertes par ledit réseau, ce dispositif (10) comportant :
- des moyens d'obtention d'un fichier (FZ) définissant lesdites zones (Z1, Z2, Z3) de service, une zone (Z1) de service étant définie dans ce fichier (FZ), par la liste des adresses (ADa, ADb) des bornes fixes (20a, 20b) d'accès au réseau, situées dans ladite zone (Z1) ;
- des moyens de communication sans fil (11) adaptés à obtenir périodiquement l'adresse (ADa) de la borne fixe (20a) de rattachement dudit dispositif (10) audit réseau de télécommunications sans fil (5) ;
- des moyens (14) de détermination de la zone (Z1) courante d'utilisation dudit dispositif (10) à partir dudit fichier de zones (FZ) et de ladite adresse (ADa) de ladite borne de rattachement (20a) ;
- des moyens pour obtenir un fichier définissant les services offerts dans ladite zone (Z1) ; et
- des moyens (17) de présentation desdits services à un utilisateur dudit dispositif.

2. Dispositif d'accès selon la revendication 1, dans lequel une pluralité des terminaux (10, 11) reliés audit réseau de télécommunication sans fil (5) constituent un réseau de pairs, ce dispositif (10) étant **caractérisé en ce qu'**il comporte :
- des moyens pour s'abonner en tant que pair client dans ledit réseau de pairs ; et **en ce que** :
- les moyens d'obtention dudit fichier de zones (FZ) et dudit fichier de services sont adaptés à obtenir lesdits fichiers à partir de pairs (11) dudit réseau de pairs.

3. Dispositif de gestion d'une offre des services délivrés dans des zones de services (Z1, Z2, Z3) couvertes par un réseau de télécommunications sans fil (5), ce dispositif (30) comportant :
- des moyens de mémorisation d'un fichier (FZ) définissant lesdites zones de services (Z1, Z2, Z3), une zone de service (Z1) étant définie dans ce fichier (FZ), par la liste des adresses (ADa, ADb) des bornes fixes (20a, 20b) d'accès au réseau de communication sans fil (5), situées dans ladite zone (Z1) ;
- des moyens de mémorisation d'un fichier définissant les services offerts dans lesdites zones (Z1, Z2, Z3); et
- des moyens pour mettre lesdits fichiers à disposition de terminaux reliés audit réseau de communication.

4. Dispositif de gestion selon la revendication 3, **caractérisé en ce qu'**il constitue un pair (30) serveur dans un réseau de pairs constitué par une pluralité de terminaux (10, 11) reliés audit réseau de télécommunication, et **en ce qu'**il comporte :
- des moyens de réception d'une requête d'abonnement en provenance d'un pair (10) client dans ledit réseau de pairs ; et
- des moyens d'envoi audit pair (10) client, en réponse à ladite requête, d'une référence pour obtenir ledit fichier de zones (FZ) à partir d'un pair (11) dudit réseau de pairs.

5. Procédé d'accès à des services délivrés dans des zones de service (Z1, Z2, Z3) couvertes par un réseau (5) de télécommunications sans fil, ce procédé étant susceptible d'être mis en oeuvre par un dispositif d'accès selon la revendication 1 ou 2, ce procédé comportant :
- une étape (E20) d'obtention d'un fichier (FZ) définissant lesdites zones de service (Z1, Z2, Z3), une zone de service étant définie dans ce fichier, par la liste des adresses (ADa, ADb) des bornes fixes (20a, 20b) d'accès au réseau situées dans ladite zone (Z1) ;
- une étape (E30) d'obtention de l'adresse (ADa) de la borne fixe (20a) de rattachement dudit dispositif d'accès (10) audit réseau de télécommunications sans fil ;
- une étape (E40) de détermination de la zone (Z1) courante d'utilisation dudit dispositif (10) à partir dudit fichier de zones (FZ) et de ladite adresse (ADa) de ladite borne de rattachement ;
- une étape (E60) d'obtention d'un fichier définissant les services offerts dans ladite zone ; et
- une étape (E70) de présentation desdits services à un utilisateur dudit dispositif.

6. Procédé d'accès selon la revendication 5 **caractérisé en ce qu'**il comporte :
- une étape (E10) d'abonnement dudit dispositif client en tant que pair client dans un réseau de pairs constitué par une pluralité des terminaux reliés audit réseau de télécommunication sans fil; et **en ce que** :
- lesdites étapes (E20, E60) d'obtention desdits fichiers de zones (FZ) et de services permettent d'obtenir lesdits fichiers à partir de pairs dudit réseau de pairs.

7. Programme d'ordinateur sur un support d'informations, ledit programme pouvant être mis en oeuvre par un dispositif (10) d'accès selon la revendication 1 ou 2, **caractérisé en ce qu'**il comporte des instructions adaptées à la mise en oeuvre du procédé d'accès selon la revendication 5 ou 6.

8. Support d'informations lisible par un dispositif d'accès (10) selon la revendication 1 ou 2, **caractérisé en ce qu'**il comporte des instructions d'un programme d'ordinateur selon la revendication 7.

9. Procédé de gestion d'une offre des services délivrés dans des zones de services (Z1, Z2, Z3) couvertes par un réseau de télécommunications sans fil (5), ce procédé comportant :
- une étape (F10) de mémorisation d'un fichier (F2) définissant lesdites zones de services, une zone de service (Z1) étant définie dans ce fichier, par la liste des adresses (ADa, ADb) des bornes fixes (20a, 20b) d'accès au réseau de télécommunications sans fil, situées dans ladite zone (Z1);
- une étape (F20) de mémorisation d'un fichier définissant les services offerts dans lesdites zones (Z1, Z2, Z3) ; et
- une étape (F30) au cours de laquelle on met lesdits fichiers à disposition de terminaux reliés audit réseau de communication.

10. Procédé de gestion selon la revendication 9, susceptible d'être mis en oeuvre par un pair serveur dans un réseau de pairs, constitué par une pluralité de terminaux reliés audit réseau de télécommunication, **caractérisé en ce qu'**il comporte :
- une étape (F40) de réception d'une requête d'abonnement en provenance d'un pair client (10) dans ledit réseau de pairs ; et
- une étape (F50) d'envoi audit pair client, en réponse à ladite requête, d'une référence pour obtenir ledit fichier de zones (F2) à partir d'un pair (19) dudit réseau de pairs.

11. Programme d'ordinateur sur un support d'informations, ledit programme pouvant être mis en oeuvre par un dispositif de gestion (30) selon la revendication 3 ou 4, **caractérisé en ce qu'**il comporte des instructions d'un procédé de gestion selon la revendication 9 ou 10.

12. Support d'informations lisible par un dispositif de gestion (30) selon la revendication 3 ou 4, **caractérisé en ce qu'**il comporte des instructions d'un programme d'ordinateur selon la revendication 11.

## Claims

1. Device for accessing, via a wireless telecommunications network (5), services delivered in service zones (Z1, Z2) covered by said network, this device (10) comprising:
- means for obtaining a file (FZ) defining said service zones (Z1, Z2, Z3), a service zone (Z1) being defined in this file (FZ), by the list of the addresses (ADa, ADb) of the fixed stations (20a, 20b) for accessing the network that are situated in said zone (Z1);
- wireless communication means (11) suitable for periodically obtaining the address (ADa) of the fixed attachment station (20a) tying said device (10) to said wireless telecommunications network (5);
- means (14) for determining the current zone (Z1) of use of said device (10) on the basis of said zone file (FZ) and of said address (ADa) of said attachment station (20a);
- means for obtaining a file defining the services offered in said zone (Z1); and
- means (17) for presenting said services to a user of said device.

2. Access device according to claim 1, in which a plurality of the terminals (10, 11) linked to said wireless telecommunication network (5) constitute a peer network, this device (10) being **characterized in that** it comprises:
- means for subscribing as client peer in said peer network; and **in that**:
- the means for obtaining said zone file (FZ) and said service file are suitable for obtaining said files from peers (11) of said peer network.

3. Device for managing an offer of the services delivered in service zones (Z1, Z2, Z3) covered by a wireless telecommunications network (5), this device (30) comprising:
- means for storing a file (FZ) defining said service zones (Z1, Z2, Z3), a service zone (Z1) being defined in this file (FZ), by the list of the addresses (ADa, ADb) of the fixed stations (20a, 20b) for accessing the wireless communication network (5), situated in said zone (Z1);
- means for storing a file defining the services offered in said zones (Z1, Z2, Z3); and
- means for making said files available to terminals (10, 11) linked to said telecommunication network (5).

4. Management device according to Claim 3, **characterized in that** it constitutes a server peer (30) in a peer network formed by a plurality of terminals (10, 11) linked to said telecommunication network (5), and **in that** it comprises:
- means for receiving a subscription request originating from a client peer (10) in said peer network; and
- means for sending to said client peer (10), in response to said request, a reference so as to obtain said zone file (FZ) from a peer (11) of said peer network.

5. Method for accessing services delivered in service zones (Z1, Z2, Z3) covered by a wireless telecommunications network (5), this method being able to be implemented by an access device according to Claim 1 or 2, this method comprising:
- a step (E20) of obtaining a file (FZ) defining said service zones (Z1, Z2, Z3), a service zone being defined in this file, by the list of the addresses (ADa, ADb) of the fixed stations (20a, 20b) for accessing the network that are situated in said zone (Z1);
- a step (E30) of obtaining the address (ADa) of the fixed attachment station (20a) tying said access device (10) to said wireless telecommunications network;
- a step (E40) of determining the current zone (Z1) of use of said device (10) on the basis of said zone file (FZ) and of said address (ADa) of said attachment station;
- a step (E60) of obtaining a file defining the services offered in said zone; and
- a step (E70) of presenting said services to a user of said device.

6. Access method according to Claim 5 **characterized in that** it comprises:
- a step (E10) of subscribing said client device as client peer in a peer network constituted by a plurality of the terminals linked to said wireless telecommunication network; and **in that**:
- said steps (E20, E60) of obtaining said files of zones (FZ) and of services allow to obtain said files from peers of said peer network.

7. Computer program on an information medium, said program being able to be implemented by an access device (10) according to Claim 1 or 2, **characterized in that** it comprises instructions suitable for implementing the access method according to Claim 5 or 6.

8. Information medium readable by an access device (10) according to Claim 1 or 2, **characterized in that** it comprises instructions of a computer program according to Claim 7.

9. Method of managing an offer of the services delivered in service zones (Z1, Z2, Z3) covered by a wireless telecommunications network (5), this method comprising:
- a step (F10) of storing a file (F2) defining said service zones, a service zone (Z1) being defined in this file, by the list of the addresses (ADa, ADb) of the fixed stations (20a, 20b) for accessing the wireless telecommunications network that are situated in said zone (Z1);
- a step (F20) of storing a file defining the services offered in said zones (Z1, Z2, Z3); and
- a step (F30) in the course of which said files are made available to terminals (10, 11) linked to said telecommunication network (5).

10. Management method according to Claim 9, being able to be implemented by a server peer in a peer network formed by a plurality of terminals (10, 11) linked to said telecommunication network (5), **characterized in that** it comprises:
- a step (F40) of receiving a subscription request originating from a client peer (10) in said peer network; and
- a step (F50) of sending to said client peer, in response to said request, a reference so as to obtain said zone file (F2) from a peer (19) of said peer network.

11. Computer program on an information medium, said program being able to be implemented by a management device (30) according to Claim 3 or 4, **characterized in that** it comprises instructions of a management method according to Claim 9 or 10.

12. Information medium readable by a management device (30) according to Claim 3 or 4, **characterized in that** it comprises instructions of a computer program according to Claim 11.

## Patentansprüche

1. Vorrichtung für den Zugang über ein drahtloses Telekommunikationsnetz (5) zu Diensten, die in Dienstsbereichen (Z1, Z2), die von dem Netz abgedeckt sind, bereitgestellt werden, wobei diese Vorrichtung (10) Folgendes aufweist:
- Mittel zur Erlangung einer Datei (FZ), die die Dienstsbereiche (Z1, Z2, Z3) festlegt, wobei ein Dienstsbereich (Z1) in dieser Datei (FZ) durch die Liste der Adressen (ADa, ADb) der sich in dem Bereich (Z1) befindlichen festen Anschlüsse (20a, 20b) des Zugangs zum Netz festgelegt ist;
- drahtlose Kommunikationsmittel (11), die geeignet sind, regelmäßig die Adresse (ADa) des festen Anschlusses (20a) zum Anschluss der Vorrichtung (10) an das drahtlose Telekommunikationsnetz (5) zu erhalten;
- Mittel (14) zur Bestimmung des üblichen Bereichs (Z1) der Verwendung der Vorrichtung (10) anhand der Bereichsdatei (FZ) und der Adresse (ADa) des Anschlusses (20a);
- Mittel zur Erlangung einer Datei zur Festlegung der in dem Bereich (Z1) angebotenen Dienste; und
- Mittel (17) zur Darstellung der Dienste für einen Benutzer der Vorrichtung.

2. Zugangsvorrichtung nach Anspruch 1 bei der mehrere Endgeräte (10, 11), die mit dem drahtlosen Telekommunikationsnetz (5) verbunden sind, ein Peer-to-Peer-Netzwerk bilden, wobei diese Vorrichtung (10) **dadurch gekennzeichnet ist, dass** sie Folgendes aufweist:
- Mittel, um sich als Peer-Client in dem Peer-to-Peer-Netzwerk anzumelden; sowie **dadurch**, dass:
- die Mittel zum Erhalt der Bereichsdatei (FZ) und der Dienstedatei geeignet sind, die Dateien anhand von Peers (11) des Peer-to-Peer-Netzwerks zu erhalten.

3. Vorrichtung zur Verwaltung eines Angebots der Dienste, die in den Dienstsbereichen (Z1, Z2, Z3), die von einem drahtlosen Telekommunikationsnetz (5) abgedeckt sind, bereitgestellt werden, wobei diese Vorrichtung (30) Folgendes aufweist:
- Mittel zum Speichern einer Datei (FZ), die die Dienstsbereiche (Z1, Z2, Z3) festlegt, wobei ein Dienstsbereich (Z1) in dieser Datei (FZ) durch die Liste der Adressen (ADa, ADb) der sich in dem Bereich (Z1) befindlichen festen Anschlüsse (20a, 20b) des Zugangs zum drahtlosen Telekommunikationsnetz (5) festgelegt ist;
- Mittel zum Speichern einer Datei, die die in den Bereichen (Z1, Z2, Z3) angebotenen Dienste festlegt; und
- Mittel, um die Dateien Endgeräten (10, 11), die mit dem Telekommunikationsnetz (5) verbunden sind, zur Verfügung zu stellen.

4. Vorrichtung zur Verwaltung nach Anspruch 3, **dadurch gekennzeichnet, dass** sie einen Peer-Server (30) in einem Peer-to-Peer-Netzwerk bildet, wobei das Peer-to-Peer-Netzwerk von mehreren Endgeräten (10, 11), die mit dem Telekommunikationsnetz (5) verbunden sind, gebildet ist, und dass sie Folgendes aufweist:
- Mittel zum Empfang eines Anmeldeantrags, der von einem Peer-Client (10) in dem Peer-to-Peer-Netzwerk stammt; und
- Mittel zum Verschicken einer Referenz an den Peer-Client (10) als Antwort auf den Antrag, um die Bereichsdatei (FZ) aus einem Peer (11) des Peer-to-Peer-Netzwerks zu erhalten.

5. Verfahren für den Zugang zu Diensten, die in Dienstsbereichen (Z1, Z2, Z3), die von einem drahtlosen Telekommunikationsnetz (5) abgedeckt sind, bereitgestellt werden, wobei dieses Verfahren durch eine Zugangsvorrichtung nach Anspruch 1 oder 2 ausgeführt werden kann, wobei dieses Verfahren Folgendes aufweist:
- einen Schritt (E20) zur Erlangung einer Datei (FZ), die die Dienstsbereiche (Z1, Z2, Z3) festlegt, wobei ein Dienstsbereich in dieser Datei durch die der Adressen (ADa, ADb) der sich in dem Bereich (Z1) befindlichen festen Anschlüsse (20a, 20b) des Zugangs zum Netz festgelegt ist;
- einen Schritt (E30) des Erhalts der Adresse (Ada) des festen Anschlusses (20a) zum Anschluss der Zugangsvorrichtung (10) an das drahtlose Telekommunikationsnetz;
- einen Schritt (E40) zur Bestimmung des üblichen Bereichs (Z1) der Verwendung der Vorrichtung (10) anhand der Bereichsdatei (FZ) und der Adresse (ADa) des Anschlusses;
- einen Schritt (E60) zum Erhalt einer Datei, die die in dem Bereich angebotenen Dienste festlegt; und
- einen Schritt (E70) zur Darstellung der Dienste für einen Benutzer der Vorrichtung.

6. Zugangsverfahren nach Anspruch 5, **dadurch gekennzeichnet, dass** es Folgendes aufweist:
- einen Schritt (E10) der Anmeldung der Clientvorrichtung als Peer-Client in einem Peer-to-Peer-Netzwerk, das aus mehreren Endgeräten besteht, die mit dem drahtlosen Telekommunikationsnetz verbunden sind; sowie dadurch, dass
- die Dateien aus Peers des Peer-to-Peer-Netzwerks durch die Schritte (E20, E60) zum Erhalt der Bereichs- und Dienstsdateien (FZ) erhalten werden können.

7. Computerprogramm auf einem Informationsträger, wobei das Programm durch eine Zugangsvorrichtung (10) nach Anspruch 1 oder 2 ausgeführt werden kann, **dadurch gekennzeichnet, dass** es Anweisungen aufweist, die für die Ausführung des Zugangsverfahrens nach Anspruch 5 oder 6 geeignet sind.

8. Informationsträger, der von einer Zugangsvorrichtung (10) nach Anspruch 1 oder 2 gelesen werden kann, **dadurch gekennzeichnet, dass** er Anweisungen eines Computerprogramms nach Anspruch 7 aufweist.

9. Verfahren zur Verwaltung eines Angebots der Dienste, die in den Dienstsbereichen (Z1, Z2, Z3), die von einem drahtlosen Telekommunikationsnetz (5) abgedeckt sind, bereitgestellt werden, wobei dieses Verfahren Folgendes aufweist :
- einen Schritt (F10) zum Speichern einer Datei (FZ), die die Dienstsbereiche festlegt, wobei ein Dienstsbereich (Z1) in dieser Datei durch die Liste der Adressen (ADa, ADb) der sich in dem Bereich (Z1) befindlichen festen Anschlüsse (20a, 20b) des Zugangs zum drahtlosen Telekommunikationsnetz festgelegt ist;
- einen Schritt (F20) zum Speichern einer Datei, die die in den Bereichen (Z1, Z2, Z3) angebotenen Dienste festlegt; und
- einen Schritt (F30), während dem die Dateien Endgeräten (10, 11), die mit dem Telekommunikationsnetz (5) verbunden sind, zur Verfügung gestellt werden.

10. Verfahren zur Verwaltung nach Anspruch 9, das von einem Peer-Server in einem Peer-to-Peer-Netzwerk ausgeführt werden kann, wobei das Peer-to-Peer-Netzwerk von mehreren Endgeräten (10, 11), die mit dem Telekommunikationsnetz (5) verbunden sind, gebildet ist, **dadurch gekennzeichnet, dass** es Folgendes aufweist:
- einen Schritt (F40) zum Empfang eines Anmeldeantrags, der von einem Peer-Client (10) in dem Peer-to-Peer-Netzwerk stammt; und
- einen Schritt (F50) des Verschickens einer Referenz an den Peer-Client als Antwort auf den Antrag, um die Bereichsdatei (FZ) aus einem Peer (19) des Peer-to-Peer-Netzwerks zu erhalten.

11. Computerprogramm auf einem Informationsträger, wobei das Programm durch eine Zugangsvorriehtung (30) nach Anspruch 3 oder 4 ausgeführt werden kann, **dadurch gekennzeichnet, dass** es Anweisungen für ein Verwaltungsverfahren nach Anspruch 9 oder 10 aufweist.

12. Informationsträger, der von einer Verwaltungsvorrichtung (30) nach Anspruch 3 oder 4 gelesen werden kann, **dadurch gekennzeichnet, dass** er Anweisungen eines Computerprogramms nach Anspruch 11 aufweist.
